# EUROPÄISCHE PATENTSCHRIFT

(11) **EP 4 441 524 B1**
(45) Veröffentlichungstag und Bekanntmachung des Hinweises auf die Patenterteilung: **18.03.2026**
(21) Anmeldenummer: 22822530.6
(22) Anmeldetag: 29.11.2022
(51) Int. Cl.: G01S 7/481, G01S 7/497, G01S 17/42, G01S 17/931

(54) **VERFAHREN ZUM BETREIBEN EINES LIDAR-SYSTEMS, LIDAR-SYSTEM UND FAHRZEUG MIT WENIGSTENS EINEM LIDAR-SYSTEM**
METHOD FOR OPERATING A LIDAR SYSTEM, LIDAR SYSTEM, AND VEHICLE COMPRISING AT LEAST ONE LIDAR SYSTEM
PROCÉDÉ DE FONCTIONNEMENT D'UN SYSTÈME LIDAR, SYSTÈME LIDAR ET VÉHICULE COMPRENANT AU MOINS UN SYSTÈME LIDAR

(30) Priorität: 30.11.2021 DE 102021131351
(43) Veröffentlichungstag der Anmeldung: 09.10.2024
(73) Patentinhaber: Valeo Schalter und Sensoren GmbH, 74321 Bietigheim-Bissingen (DE)
(72) Erfinder: PARL, Christoph, 74321 Bietigheim-Bissingen (DE); BEUTH, Thorsten, 74321 Bietigheim-Bissingen (DE)
(74) Vertreter: Pothmann, Karsten
(86) Internationale Anmeldenummer: PCT/EP2022/083563
(87) Internationale Veröffentlichungsnummer: WO 2023/099426

(56) Entgegenhaltungen:
- DE-A1- 102020 206 006

## Beschreibung

### Technisches Gebiet

Die Erfindung betrifft ein Verfahren zum Betreiben eines LiDAR-Systems, insbesondere eines LiDAR-Systems für ein Fahrzeug, bei dem
mit wenigstens einer Sendeeinrichtung wenigstens ein optischer Strahl in wenigstens einen Überwachungsbereich gesendet wird,
mit wenigstens einem Empfangsbereich wenigstens einer Empfangseinrichtung wenigstens ein an wenigstens einem in dem wenigstens einen Überwachungsbereich vorhandenen Objekt reflektierter optischer Strahl empfangen und in wenigstens eine Empfangsgröße umgewandelt wird,
aus wenigstens einer Empfangsgröße wenigstens eine Objektinformation zu wenigstens einem den optischen Strahl reflektierenden Objekt ermittelt wird.

Ferner betrifft die Erfindung ein LiDAR-System, insbesondere LiDAR-System für ein Fahrzeug,
mit wenigstens einer Sendeeinrichtung zum Senden von optischen Strahlen in wenigstens einen Überwachungsbereich, wobei die wenigstens eine Sendeeinrichtung wenigstens eine Strahlquelle zur Erzeugung von optischen Strahlen aufweist,
mit wenigstens einer Empfangseinrichtung, welche wenigstens einen Empfangsbereich aufweist zum Empfangen von an Objekten in dem wenigstens einen Überwachungsbereich reflektierten optischen Strahlen und zur Umwandlung von empfangenen optischen Strahlen in entsprechende Empfangsgrößen, und mit wenigstens einer Auswerteeinrichtung zur Ermittlung von Objektinformationen zu wenigstens einem optische Strahlen reflektierenden Objekt aus ermittelten Empfangsgrößen.

Außerdem betrifft die Erfindung ein Fahrzeug mit wenigstens einem LiDAR-System.

### Stand der Technik

Aus der WO 2019/020591 A1 ist ein abtastendes optisches Detektionssystem eines Fahrzeugs zur Überwachung eines Überwachungsbereichs auf Objekte hin bekannt, aufweisend wenigstens eine Sendevorrichtung, mit wenigstens einer Lichtquelle zur Erzeugung wenigstens eines optischen Sendesignals und mit wenigstens einer auf das wenigstens eine Sendesignal diffraktiv wirkenden Beugungseinheit zur Steuerung wenigstens einer Strahlrichtung des wenigstens einen Sendesignals, wenigstens eine Empfangsvorrichtung zum Empfangen von wenigstens einem optischen Empfangssignal, welches von wenigstens einem Sendesignal herrührt, das an einem Objekt reflektiert wird, und wenigstens eine Steuer- und/oder Auswerteeinrichtung zur Steuerung der wenigstens einen Sendevorrichtung und/oder der wenigstens einen Empfangsvorrichtung und/oder zur Auswertung von mit der wenigstens einen Empfangsvorrichtung empfangenen Empfangssignalen. Die DE102020206006 offenbart ein Verfahren zum Kalibrieren und/oder Justieren eines Lidar-Systems, bei dem mit einer Sendeeinrichtung ein optischer Strahl in einen Überwachungsbereich gesendet und der an einem Objekt reflektierte Strahl mit einer Detektoreinheit empfangen wird. Der optische Strahl weist dabei ein Strahlprofil auf, das Strahlprofilabschnitte mit unterschiedlichen Intensitäten umfasst. Um die Ausrichtung der Sendeeinrichtung relativ zur Detektoreinheit zu ermitteln, schlägt dieses Dokument vor, den mit der Detektoreinheit empfangenen optischen Strahl auszuwerten, um eine Mittenposition und/oder Breite der Verteilung der Positionsdaten zu erkennen und diese mit erwarteten Positionsdaten oder einer erwarteten Mittenposition zu vergleichen. Dabei werden auch unterschiedliche Strahlprofilabschnitte des empfangenen Strahls mit unterschiedlichen Empfangsbereichen empfangen.

Der Erfindung liegt die Aufgabe zugrunde, ein Verfahren, ein LiDAR-System und ein Fahrzeug der eingangs genannten Art zu gestalten, bei denen eine Erfassung von Objekten in wenigstens einem Überwachungsbereich, insbesondere von unterschiedlich stark reflektierenden Objekten und/oder Objekten mit unterschiedlich stark reflektierenden Bereichen, verbessert werden kann.

### Offenbarung der Erfindung

Die Aufgabe wird erfindungsgemäß bei dem Verfahren dadurch gelöst, dass
wenigstens ein optischer Strahl mit einer über sein Strahlprofil definierten Intensitätsverteilung gesendet wird,
wenigstens zwei Strahlprofilabschnitte des Strahlprofils des wenigstens einen optischen Strahls auf wenigstens zwei benachbarte Empfangsbereiche abgebildet, mit den Empfangsbereichen jeweils empfangen und in jeweilige Empfangsgrößen umgewandelt werden,
wobei der wenigstens eine optische Strahl in den wenigstens zwei Strahlprofilabschnitten mit unterschiedlichen Intensitäten gesendet und bei dem die Verhältnisse der räumlichen Ausdehnung der Strahlprofilabschnitte in einer Raumrichtung mit unterschiedlichen Intensitäten den Verhältnissen der Abstände der Zentren der wenigstens zwei Empfangsbereiche entspricht.

Erfindungsgemäß werden optische Strahlen mit definierten Intensitätsverteilungen über ihr jeweiliges Strahlprofil gesendet. Wenigstens zwei Strahlprofilabschnitte des Strahlprofils werden mit unterschiedlichen Intensitäten gesendet. Auf Seiten eines angestrahlten Objekts werden benachbarte Bereiche mit den Strahlprofilabschnitten mit unterschiedlichen Intensitäten angestrahlt. Hierzu ist keine Anpassung der Sendeleistung von Senderlichtquellen und/oder von Sendeoptiken aufseiten der wenigstens einen Sendeeinrichtung erforderlich. Die reflektierten Strahlprofilabschnitte werden auf benachbarte Empfangsbereiche der wenigstens einen Empfangseinrichtung abgebildet, mit diesen empfangen und in entsprechende Empfangsgrößen umgewandelt.

Die Realisierung von unterschiedlichen Intensitäten in benachbarten Bereichen kann so mit einem entsprechend geringen technischen Aufwand ermöglicht werden. So können gleichzeitig ein schwach reflektierender Bereich auf der Objektseite mit einem Strahlprofilabschnitt mit höherer Intensität und ein benachbarter stark reflektierender, insbesondere retroreflektiver, Bereich mit einem Strahlprofilabschnitt mit geringerer Intensität abgetastet werden. Die höherer Intensität ermöglicht, dass auch schwach reflektierende Bereiche mit der Empfangseinrichtung noch erfasst werden können. Die geringere Intensität verhindert, dass stark reflektierende Bereiche zu Sättigungs- und Überstrahlungseffekten, insbesondere crosstalk, aufseiten der Empfangseinrichtung führen.

Der wenigstens eine optische Strahl kann bei einer Messung mit einem Strahlprofilabschnitt mit hoher Intensität ein Objekt, insbesondere ein Bereich eines Objekts, anstrahlen. Die geringeren Intensitäten der benachbarten Strahlprofilabschnitte können ausreichen, um benachbarte hoch reflektive Bereiche von Objekten zu erfassen.

Mit der wenigstens einen Empfangseinrichtung wird wenigstens ein reflektierter optischer Strahl empfangen und in wenigstens einer Empfangsgröße umgewandelt. Die wenigstens eine Empfangsgröße kann mit entsprechenden Auswertemitteln insbesondere des LiDAR-Systems weiter verarbeitet werden.

Vorteilhafterweise kann wenigstens eine Empfangsgröße eine elektrische Empfangsgröße sein. Elektrische Empfangsgrößen können mit elektrischen Auswertemitteln ausgewertet und weiterverarbeitet werden.

Aus wenigstens einer Empfangsgröße wird wenigstens eine Objektinformation zu wenigstens einem Objekt ermittelt, an dem der wenigstens eine optische Strahl reflektiert wird. Als Objektinformationen können Entfernungen, Richtungen und/oder Geschwindigkeiten von mit dem LiDAR-System erfassten Objekten relativ zu dem LiDAR-System ermittelt werden.

"Optisch" im Sinne der Erfindung bezieht sich auf sichtbare und unsichtbare Bereiche von elektromagnetischen Strahlen, insbesondere Lichtstrahlen. Die mit "optisch" bezeichneten Bauteile sind entsprechend zur Verwendung im Zusammenhang mit für Menschen sichtbaren und unsichtbaren Bereichen von elektromagnetischen Strahlen geeignet. Bei den optischen Strahlen kann es sich um Lichtstrahlen, insbesondere Laserstrahlen, im sichtbaren oder im unsichtbaren Bereich handeln.

Vorteilhafterweise kann ein Laserstrahl als wenigstens ein optischer Strahl gesendet werden. Laserstrahlen können gezielt mit definierten Intensitätsverteilungen über ihre Strahlprofile realisiert werden.

Vorteilhafterweise kann wenigstens ein optisches Signal, insbesondere ein Lasersignal, als wenigstens ein optischer Strahl gesendet werden. Auf diese Weise kann der optische Strahl zusätzliche Informationen, insbesondere Kodierungen oder dergleichen, aufweisen.

Vorteilhafterweise kann der wenigstens eine optische Strahl in Form von Signalpulsen, insbesondere Laserpulsen, realisiert werden. Signalpulse können auf der Empfangsbereichsseite besser zugeordnet werden.

Vorteilhafterweise kann das LiDAR-System nach einem Signal-Laufzeitverfahren arbeiten. Bei einem Signal-Laufzeitverfahren kann abhängig von der Laufzeit eines gesendeten optischen Strahls eine Entfernung zu einem Objekt, an dem der optische Strahl reflektiert wird, ermittelt werden.

Vorteilhafterweise kann das LiDAR-System als laserbasiertes Entfernungsmesssystem ausgestaltet sein. Laserbasierte Entfernungsmesssysteme können Laser, insbesondere Diodenlaser, als Strahlquellen aufweisen. Mit Lasern können insbesondere gepulste Laserstrahlen als optische Strahlen gesendet werden. Mit Lasern können optische Strahlen in für das menschliche Auge sichtbaren oder nicht sichtbaren Wellenlängenbereichen emittiert werden. Entsprechend können Empfangsbereiche des LiDAR-Systems mit für die Wellenlänge der ausgesendeten optischen Strahlen ausgelegte Sensoren, insbesondere Punktsensoren, Zeilensensoren und/oder Flächensensoren, im Besonderen eine (Lawinen)fotodioden, Photodiodenzeilen, CCD-Sensoren, Active-Pixel-Sensoren, insbesondere CMOS-Sensoren oder dergleichen, realisiert werden. Vorteilhafterweise kann die Erfindung bei Fahrzeugen, insbesondere Kraftfahrzeugen, verwendet werden. Vorteilhafterweise kann die Erfindung bei Landfahrzeugen, insbesondere Personenkraftwagen, Lastkraftwagen, Bussen, Motorrädern oder dergleichen, Luftfahrzeugen, insbesondere Drohnen, und/oder Wasserfahrzeugen verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb, in der Robotik und/oder bei Maschinen, insbesondere Bau- oder Transportmaschinen, wie Kränen, Baggern oder dergleichen, eingesetzt werden.

Das LiDAR-System kann vorteilhafterweise mit wenigstens einer elektronischen Steuervorrichtung eines Fahrzeugs und/oder einer Maschine, insbesondere einem Fahrerassistenzsystem oder dergleichen, verbunden oder Teil einer solchen sein. Auf diese Weise kann wenigstens ein Teil der Funktionen des Fahrzeugs und/oder der Maschine autonom oder teilautonom ausgeführt werden.

Das LiDAR-System kann zur Erfassung von stehenden oder bewegten Objekten, insbesondere Fahrzeugen, Personen, Tieren, Pflanzen, Hindernissen, Fahrbahnunebenheiten, insbesondere Schlaglöchern oder Steinen, Fahrbahnbegrenzungen, Verkehrszeichen, Freiräumen, insbesondere Parklücken, Niederschlag oder dergleichen, und/oder von Bewegungen und/oder Gesten eingesetzt werden.

Bei einer vorteilhaften Ausgestaltung des Verfahrens kann
wenigstens ein optischer Strahl gesendet werden, dessen Strahlprofil eine bezüglich wenigstens einer Strahlachse symmetrische Intensitätsverteilung aufweist,
   und/oder
wenigstens ein optischer Strahl gesendet werden, dessen Strahlprofil eine bezüglich wenigstens einer Strahlachse unsymmetrische Intensitätsverteilung aufweist,
   und/oder
wenigstens ein optischer Strahl gesendet werden, dessen Strahlprofil wenigstens drei Strahlprofilabschnitte mit unterschiedlichen Intensitäten aufweist. Auf diese Weise kann je nach Verwendungszweck und/oder Ausgestaltung des LiDAR-Systems ein geeignetes Strahlprofil mit einer entsprechend definierten Intensitätsverteilung erzeugt werden.

Vorteilhafterweise kann das Strahlprofil wenigstens eines optischen Strahls eine symmetrische Intensitätsverteilung aufweisen. Symmetrische Intensitätsverteilungen können einfach realisiert werden.

Alternativ oder zusätzlich kann vorteilhafterweise das Strahlprofil wenigstens eines optischen Strahls eine unsymmetrische Intensitätsverteilung aufweisen. Auf diese Weise kann eine größere Anzahl von unterschiedlichen Intensitäten mit den entsprechenden Strahlprofilschnitten gleichzeitig realisiert werden.

Alternativ oder zusätzlich kann vorteilhafterweise das Strahlprofil wenigstens eines optischen Strahls wenigstens drei Strahlprofilabschnitte mit unterschiedlichen Intensitäten aufweisen. Auf diese Weise kann der Überwachungsbereich gleichzeitig mit drei unterschiedlichen Strahlintensitäten abgetastet werden. So kann die Messzeit insgesamt verringert werden.

Bei einer weiteren vorteilhaften Ausgestaltung des Verfahrens können wenigstens zwei optische Strahlen zeitlich versetzt, insbesondere nacheinander, in unterschiedliche Strahlrichtungen in den wenigstens einen Überwachungsbereich gesendet werden. Auf diese Weise kann der wenigstens eine Überwachungsbereich mit den optischen Strahlen in wenigstens zwei Abschnitten abgetastet werden. So können mehrere Bereiche eines Objekts oder mehrere Objekte in dem wenigstens einen Überwachungsbereich erfasst werden.

Eine Strahlrichtung ist die Richtung, in welche ein optischer Strahl gesendet wird.

Bei einer weiteren vorteilhaften Ausgestaltung des Verfahrens können
Änderungen von Strahlrichtungen der wenigstens zwei optischen Strahlen mit wenigstens einer Strahlumlenkeinrichtung realisiert werden
   und/oder
Änderungen von Strahlrichtungen durch insbesondere zeitlich versetztes Aktivieren von wenigstens zwei Strahlquellen, denen unterschiedliche Strahlrichtungen zugeordnet werden, realisiert werden.

Mit wenigstens einer Strahlumlenkeinrichtung kann die Strahlrichtung von optischen Strahlen, welche mit einer Signalquelle erzeugt werden, umgelenkt werden. Eine Änderung der Ausrichtung der Signalquelle ist dabei nicht erforderlich.

Alternativ oder zusätzlich kann die Strahlrichtung durch insbesondere zeitlich versetztes Aktivieren von Strahlquellen mit unterschiedlichen Strahlrichtungen realisiert werden. Die Strahlquellen können unterschiedlichen Strahlrichtungen zugeordnet werden. Dabei können die Strahlquellen selbst und/oder den Strahlquellen jeweils zugeordnete Sendeoptiken unterschiedlich ausgerichtet werden. Auf diese Weise können die optischen Strahlen in unterschiedliche Richtungen in den wenigstens einen Überwachungsbereich gesendet werden. Durch das zeitlich versetztes Aktivieren der Strahlquellen kann die Richtung, in welcher der wenigstens eine Überwachungsbereich mit den optischen Strahlen abgetastet wird, verändert werden.

Vorteilhafterweise können wenigstens zwei Strahlquellen gleichzeitig aktiviert werden. Auf diese Weise kann der Überwachungsbereich gleichzeitig mit den jeweiligen optischen Strahlen abgetastet werden.

Vorteilhafterweise können alternativ oder zusätzlich wenigstens zwei Strahlquellen zeitlich versetzt, insbesondere nacheinander, aktiviert werden. Auf diese Weise können die entsprechenden Bereiche des Überwachungsbereichs zeitlich versetzt, insbesondere nacheinander, abgetastet werden.

Alternativ oder zusätzlich können wenigstens zwei Strahlquellen verwendet werden, denen eine gemeinsame oder jeweils eine Strahlumlenkeinrichtung zugeordnet ist. Auf diese Weise können die Vorteile von wenigstens zwei Strahlquellen und die Vorteile einer Strahlumlenkeinrichtung kombiniert werden.

Bei der Strahlumlenkeinrichtung kann es sich um einen Umlenkspiegel, einen Schwenkspiegel, einen Schwingspiegel, insbesondere Mikroschwingspiegel, ein diffraktives optisches Element oder dergleichen handeln. Derartige Strahlumlenkeinrichtungen können zur entsprechenden Änderung der Strahlrichtung verändert, insbesondere relativ zu einer optischen Achse einer Strahlquelle geneigt oder geschwenkt werden.

Bei einer weiteren vorteilhaften Ausgestaltung des Verfahrens können
die Richtung der gesendeten wenigstens zwei optischen Strahlen um ein Maß, insbesondere einen Winkel, unterschiedlich eingestellt werden, welches auf der Seite der Empfangsbereiche einem ganzzahligen vielfachen eines Abstands von Zentren von benachbarten Empfangsbereichen entspricht,
   und/oder
die Richtungen der gesendeten wenigstens zwei optischen Strahlen in einer Schrittweite verändert werden, die auf der Seite der Empfangsbereiche einem Abstand von Zentren von benachbarten Empfangsbereichen entspricht. Auf diese Weise können die wenigstens zwei Strahlprofilabschnitte des wenigstens einen optischen Strahls auf die jeweils benachbarten Empfangsbereiche abgebildet werden.

Bei einer weiteren vorteilhaften Ausgestaltung des Verfahrens können zur Ermittlung von Objektinformationen Empfangsgrößen von Empfangsbereichen, auf die Strahlprofilabschnitte des reflektierten wenigstens einen optischen Strahls mit unterschiedlichen Intensitäten abgebildet werden, kombiniert werden. Auf diese Weise kann ein Dynamikbereich des LiDAR-Systems vergrößert werden. Insbesondere können Empfängergrößen von Empfangsbereichen, auf welche Strahlprofilabschnitte mit hohen Intensitäten abgebildet werden, mit Empfängergrößen von Empfangsbereichen, auf welche Strahlprofile mit verhältnismäßig geringeren Intensitäten abgebildet werden, kombiniert werden.

Bei einer weiteren vorteilhaften Ausgestaltung des Verfahrens können
wenigstens zwei benachbarte Empfangsbereiche, auf welche wenigstens zwei Strahlprofilabschnitte abgebildet werden, parallel, insbesondere zeitgleich, ausgelesen werden
   und/oder
wenigstens zwei benachbarten Empfangsbereiche, auf welche wenigstens zwei Strahlprofilabschnitte abgebildet werden, seriell, insbesondere nacheinander, ausgelesen werden
   und/oder
nur der Empfangsbereich der wenigstens zwei Empfangsbereiche, auf welche die wenigstens zwei Strahlprofilabschnitte abgebildet werden, ausgelesen werden, auf welchen der Strahlprofilabschnitt mit der größeren Intensität abgebildet wird.

Durch paralleles Auslesen von benachbarten Empfangsbereichen kann bei einer Messung ein entsprechend größerer Teil des Überwachungsbereichs gleichzeitig erfasst werden.

Durch serielles Auslesen von benachbarten Empfangsbereichen kann auf der Seite der Empfangseinrichtung eine Verarbeitungsgeschwindigkeit, mit der die Empfangsgrößen verarbeitet werden, verringert werden. So können Auswerteeinrichtungen mit geringerer Leistungsfähigkeit verwendet werden.

Durch das Auslesen lediglich des Empfangsbereichs, welcher die größte Intensität empfängt, kann die zu verarbeitende Datenmenge verringert werden.

Bei der erfindungsgemäßen Ausgestaltung des Verfahrens wird wenigstens ein optischer Strahl mit einem definierten Strahlprofil gesendet, bei dem die Verhältnisse der räumlichen Ausdehnung der Strahlprofilabschnitte in einer Raumrichtung mit unterschiedlichen Intensitäten den Verhältnissen der Abstände der Zentren der wenigstens zwei Empfangsbereiche entspricht. Auf diese Weise können die Strahlprofilabschnitte auch bei veränderter Strahlrichtung des wenigstens einen optischen Strahls auf die jeweiligen Empfangsbereiche abgebildet werden.

Ferner wird die Aufgabe erfindungsgemäß bei dem LiDAR-System dadurch gelöst, dass die wenigstens eine Sendeeinrichtung wenigstens ein Mittel aufweist zur Definition einer Intensitätsverteilung in Strahlprofilen von optischen Strahlen,
die wenigstens eine Empfangseinrichtung wenigstens zwei Empfangsbereiche aufweist, die benachbart angeordnet sind,
die wenigstens eine Empfangseinrichtung wenigstens ein Abbildungsmittel aufweist zur Abbildung von wenigstens zwei Strahlprofilabschnitten von Strahlprofilen von optischen Strahlen auf die wenigstens zwei benachbarten Empfangsbereiche,
wobei die Intensität in Strahlprofilabschnitten von gesendeten optischen Strahlen vor deren Reflektion, welche den wenigstens zwei auf die wenigstens zwei Empfangsbereiche abgebildeten Strahlprofilabschnitten der reflektierten optischen Strahlen entsprechen, unterschiedlich sind.

Erfindungsgemäß weist die wenigstens eine Sendeeinrichtung wenigstens ein Mittel zur Definition von Intensitätsverteilung in Strahlprofilen von optischen Strahlen auf. Auf diese Weise können mit einem optischen Strahl unterschiedliche Intensitäten gleichzeitig in den wenigstens einen Überwachungsbereich gesendet werden. Auf diese Weise können unterschiedliche Intensitäten realisiert werden, ohne dass hierfür eine Veränderung der Sendeleistung von entsprechenden Strahlquellen und/oder Veränderungen bei etwaigen Sendeoptiken erforderlich ist.

Die wenigstens eine Empfangseinrichtung weist wenigstens zwei Empfangsbereiche auf. Auf die wenigstens zwei Empfangsbereiche können die Strahlprofilabschnitte von reflektierten optischen Strahlen entsprechend abgebildet werden.

Bei einer vorteilhaften Ausführungsform kann
wenigstens eine Sendeeinrichtung wenigstens ein Strahlformmittel, insbesondere wenigstens eine optische Linse oder dergleichen, aufweisen zum Formen von definierten Strahlprofilen von mit der wenigstens einen Strahlquelle erzeugten optischen Strahlen und/oder
wenigstens eine Sendeeinrichtung mehrere Strahlquellen jeweils zur Erzeugung von individuellen optischen Strahlen aufweist, die so angeordnet sind, dass die individuellen optischen Strahlen zu optischen Strahlen mit Strahlprofilen mit definierten Intensitätsverteilungen kombiniert werden.

Durch die Verwendung wenigstens einen Strahlformmittels ist lediglich eine Strahlquelle erforderlich, um ein entsprechendes Strahlprofil zu erzeugen.

Alternativ oder zusätzlich können mehrere Strahlquellen vorgesehen sein. Die Strahlquellen können individuelle Strahlprofile aufweisen. Die individuellen Strahlen mit den jeweiligen Strahlprofilen können kombiniert werden, sodass ein einziger optischer Strahl mit einem gewünschten Strahlprofil mit definierter Intensitätsverteilung entsteht. Auf diese Weise kann die räumliche Ausdehnung des optischen Strahls vergrößert werden. So kann ein größerer Abschnitt des Überwachungsbereichs mit dem optischen Strahl abgetastet werden.

Vorteilhafterweise können den Strahlquellen unterschiedliche Strahlrichtungen zugewiesen sein. Auf diese Weise kann ein größerer Abschnitt des wenigstens einen Überwachungsbereichs streicht es gleichzeitig mit optischen Strahlen abgetastet werden.

Bei einer weiteren vorteilhaften Ausführungsform kann wenigstens eine Sendeeinrichtung wenigstens eine Strahl-Umlenkeinrichtung, insbesondere wenigstens einen Umlenkspiegel, wenigstens einen Schwenkspiegel, wenigstens einen Schwingspiegel und/oder wenigstens ein diffraktives optisches Element oder dergleichen, aufweisen. Auf diese Weise kann die Strahlrichtung der optischen Strahlen verändert werden. So kann der wenigstens eine Überwachungsbereich mit optischen Strahlen entsprechend abgetastet werden.

Außerdem wird die Aufgabe bei dem erfindungsgemäßen Fahrzeug dadurch gelöst, dass das Fahrzeug wenigstens ein erfindungsgemäßes LiDAR-System aufweist.

Erfindungsgemäß weist das Fahrzeug wenigstens ein erfindungsgemäßes LiDAR-System auf, mit dem wenigstens ein Überwachungsbereich in einer Umgebung und/oder in einem Innenraum des Fahrzeugs insbesondere auf Objekte hin überwacht werden kann.

Vorteilhafterweise kann das Fahrzeug wenigstens ein Fahrerassistenzsystem aufweisen. Mithilfe eines Fahrerassistenzsystems kann wenigstens ein Teil der Funktionen des Fahrzeugs, insbesondere Fahrfunktionen, autonom oder teilautonom betrieben werden.

Vorteilhafterweise kann wenigstens ein LiDAR-System funktional mit wenigstens einem Fahrerassistenzsystem des Fahrzeugs verbunden sein. Auf diese Weise können Informationen über den Überwachungsbereich, insbesondere über Objekte im Überwachungsbereich, die mit dem wenigstens einen LiDAR-System ermittelt werden, von dem wenigstens einen Fahrerassistenzsystem zum autonomen oder teilautonomen Betrieb des Fahrzeugs herangezogen werden.

Im Übrigen gelten die im Zusammenhang mit dem erfindungsgemäßen Verfahren, dem erfindungsgemäßen LiDAR-System und dem erfindungsgemäßen Fahrzeug und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen Personenkraftwagen in der Vorderansicht mit einem Fahrerassistenzsystem und einem LiDAR-System zur Überwachung eines Überwachungsbereichs in Fahrtrichtung vor dem Personenkraftwagen;
- Figur 2: eine Funktionsdarstellung des LiDAR-Systems und des Fahrerassistenzsystems aus der Figur 1;
- Figur 3: ein Strahlprofil eines mit einer Sendeeinrichtung des LiDAR-Systems aus der Figur 2 gesendeten optischen Strahls;
- Figur 4: eine Intensitätsverteilung gemäß einem ersten Ausführungsbeispiel entlang des Strahlprofils des optischen Strahls aus der Figur 3;
- Figur 5: eine Vorderansicht eines Empfängers einer Empfangseinrichtung des LiDAR-Systems aus der Figur 2, zum Empfang des reflektierten optischen Strahls aus der Figur 4;
- Figur 6: die Intensitätsverteilungen von drei optischen Strahlen, von denen jeder eine Intensitätsverteilung gemäß Figur 4 aufweist, welche nacheinander in um ein definiertes Maß veränderte Richtungen in den Überwachungsbereich gesendet werden;
- Figur 7: die Vorderansicht des Empfängers aus der Figur 5, zum Empfang der reflektierten optischen Strahlen aus Figur 6;
- Figur 8: die Intensitätsverteilungen von drei optischen Strahlen gemäß einem zweiten Ausführungsbeispiel, von denen jeder eine asymmetrische Intensitätsverteilung aufweist, welche nacheinander mit in um ein definiertes Maß veränderte Richtungen in den Überwachungsbereich gesendet werden;
- Figur 9: die Vorderansicht des Empfängers aus der Figur 5, zum Empfang der reflektierten optischen Strahlen aus Figur 8;
- Figur 10: eine Vorderansicht einer Laseranordnung mit drei nebeneinander angeordneten Lasern einer Sendeeinrichtung gemäß einem dritten Ausführungsbeispiel des LiDAR-Systems aus den Figuren 1 und 2;
- Figur 11: ein Strahlprofil eines optischen Strahls, der mit der Laseranordnung aus der Figur 10 erzeugt wird, wobei der optische Strahl aus den individuellen optischen Strahlen zusammengesetzt ist, der mit den drei Lasern erzeugt wird;
- Figur 12: eine Intensitätsverteilung des Strahlprofils des optischen Strahls aus der Figur 11;
- Figur 13: die Vorderansicht des Empfängers aus der Figur 7, zum Empfang des reflektierten optischen Strahls aus den Figuren 11 und 12.

In den Figuren sind gleiche Bauteile mit gleichen Bezugszeichen versehen.

### Ausführungsform(en) der Erfindung

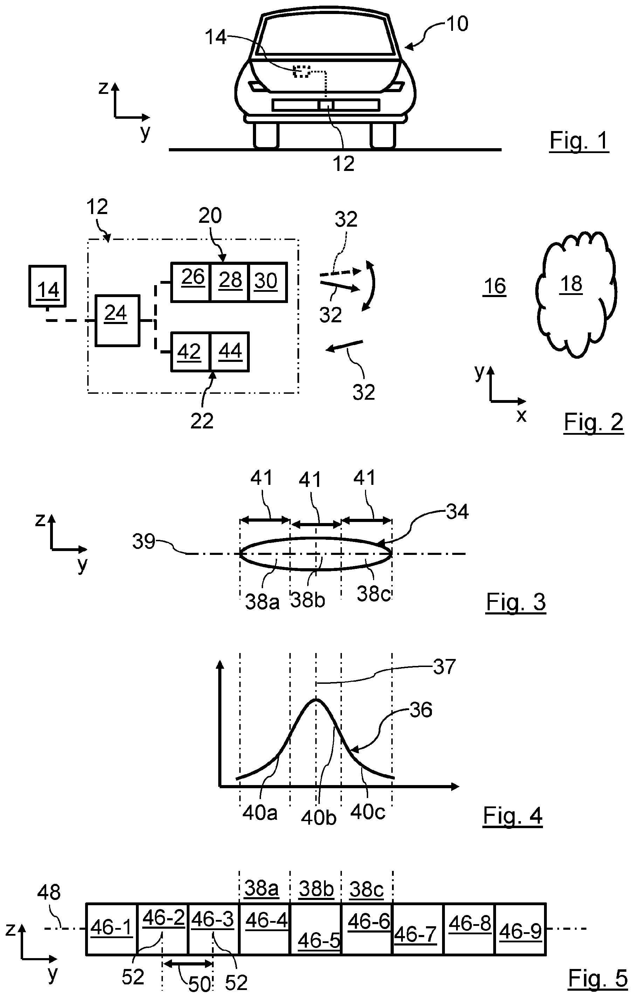

In Figur 1 ist ein Fahrzeug 10 in Form eines Personenkraftwagens in der Vorderansicht gezeigt. Das Fahrzeug 10 umfasst ein LiDAR-System 12 und ein Fahrerassistenzsystem 14. Das LiDAR-System 12 und das Fahrerassistenzsystem 14 sind in der Figur 2 in einer Funktionsdarstellung gezeigt.

Das LiDAR-System 12 befindet sich beispielhaft in der vorderen Stoßstange des Fahrzeugs 10 und ist in einen Überwachungsbereich 16 in Fahrtrichtung vor dem Fahrzeug 10 gerichtet. Das LiDAR-System 12 kann auch an anderer Stelle des Fahrzeugs 10 auch anders ausgerichtet angeordnet sein. Das Fahrzeug 10 kann auch mehrere LiDAR-Systeme 12 aufweisen, welche unterschiedlich ausgerichtet sein können.

Das LiDAR-System 12 ist funktional mit dem Fahrerassistenzsystem 14 verbunden. Über die Verbindung können Informationen über den Überwachungsbereich 16, welche mit dem LiDAR-System 12 gewonnen werden können, an das Fahrerassistenzsystem 14 übermittelt werden. Mit dem Fahrerassistenzsystem 14 kann das Fahrzeug 10 autonom oder teilautonom betrieben werden.

Mit dem LiDAR-System 12 können Objekte 18, welche sich im Überwachungsbereich 16 befinden, erfasst werden. Es können Objektinformationen, beispielsweise Entfernungen, Richtungen und/oder Geschwindigkeiten von erfassten Objekten 18 relativ zu dem LiDAR-System 12, also relativ zu dem Fahrzeug 10, ermittelt werden.

Mit dem LiDAR-System 12 können stehende oder bewegte Objekte 18, beispielsweise Fahrzeuge, Personen, Tiere, Pflanzen, Hindernisse, Fahrbahnunebenheiten, beispielsweise Schlaglöcher oder Steine, Fahrbahnbegrenzungen, Verkehrszeichen, Freiräume, insbesondere Parklücken, Niederschlag oder dergleichen, und/oder Bewegungen von Objekten 18 und/oder Gesten erfasst werden. In der Figur 2 ist beispielhaft ein Objekt 18 gezeigt.

Der besseren Orientierung wegen sind in einigen der Figuren die entsprechenden Koordinatenachsen eines kartesischen x-y-z-Koordinatensystems eingezeichnet. Bei den gezeigten Ausführungsbeispielen erstreckt sich die x-Achse beispielsweise parallel zu einer Fahrzeuglängsachse des Kraftfahrzeugs 10, die y-Achse erstreckt parallel zu einer Fahrzeugquerachse und die z-Achse erstreckt sich senkrecht zur x-y-Ebene nach räumlich oben. Wenn das Kraftfahrzeug 10 sich betriebsgemäß auf einer horizontalen Fahrbahn befindet, erstrecken sich die x-Achse und die y-Achse räumlich horizontal und die z-Achse räumlich vertikal.

In der Figur 2 sind das LiDAR-System 12 und das beispielhafte Objekt 18 in einer Draufsicht von oben, entgegen der z-Achse betrachtet, gezeigt. Die Darstellung ist nicht maßstabsgetreu.

Das LiDAR-System 12 umfasst eine Sendeeinrichtung 20, eine Empfangseinrichtung 22 und eine Steuer- und Auswerteeinrichtung 24.

Die Sendeeinrichtung 20 umfasst eine optische Strahlquelle in Form eines Lasers 26, ein Strahlformmittel in Form einer Sendelinse 28 und eine Strahl-Umlenkeinrichtung 32 beispielsweise in Form eines Schwenkspiegels. Der Laser 26 und die Strahl-Umlenkeinrichtung 32 sind steuerbar mit der Steuer- und Auswerteeinrichtung 24 verbunden.

Mit dem Laser 26 können optische Strahlen 32 in Form von Laserpulsen erzeugt und in Richtung der Sendelinse 28 gesendet werden.

Mit der Sendelinse 28 kann das Strahlprofil der optischen Strahlen 32 zu einem Strahlprofil 34 mit einer definierten Intensitätsverteilung 36 geformt werden.

In der Figur 3 ist beispielhaft ein elliptisches Strahlprofil 34 eines optischen Strahls 32 gemäß einem ersten Ausführungsbeispiel gezeigt. Die dazugehörige Intensitätsverteilung 36 ist in der Figur 4 gezeigt. Die Intensitätsverteilung 36 ist bezüglich einer Strahlachse 37 symmetrisch und hat etwa die Form einer Gauß-Kurve. Die Strahlachse 37 verläuft beispielhaft senkrecht zur Strahlrichtung des optischen Strahls 32, beispielhaft etwa parallel zur z-Achse. Die Strahlrichtung ist beispielhaft die Haupt-Ausbreitungsrichtung des optischen Strahls 32.

Das Strahlprofil 34 weist beispielhaft drei Strahlprofilabschnitte 38, nämlich 38a, 38b und 38c, auf, mit jeweiligen Intensitäten 40, nämlich 40a, 40b und 44c.

Die Strahlprofilabschnitte 38a, 38b und 38c sind entlang einer gedachten Strahlprofilachse 39 des Strahlprofils 34 nebeneinander angeordnet. Die Strahlprofilachse 39 erstreckt sich senkrecht zur Strahlrichtung des optischen Strahls 32, beispielhaft parallel zur x-y-Ebene, und senkrecht zur Strahlachse 37. Die Ausdehnungen 41 der Strahlprofilabschnitte 38a, 38b und 38c in Richtung der Strahlprofilachse 39 sind identisch.

Der Strahlprofilabschnitt 38b liegt im Zentrum des Strahlprofils 34 und umfasst das Maximum der Intensitätsverteilung 36. Die beiden Strahlprofilabschnitte 38a und 38c liegen symmetrisch auf gegenüberliegenden Seiten des zentralen Strahlprofilabschnitts 38b. Die Intensitäten 40a und 40c des optischen Strahls 32 in den beiden äußeren Strahlprofilabschnitten 38a und 38c sind gleich und jeweils größer als die Intensität 40b in dem zentralen Strahlprofilabschnitt 38b.

Die optischen Strahlen 32 mit dem definierten Strahlprofil 34 können von der Sendelinse 28 zu der Strahl-Umlenkeinrichtung 30 gesendet werden. Mit der Strahl-Umlenkeinrichtung 30 können die Strahlrichtungen der optischen Strahlen 32 eingestellt werden. So können die optischen Strahlen 32 mit der jeweiligen Strahlrichtung in den Überwachungsbereich 16 gelenkt werden.

Die Strahl-Umlenkeinrichtung 30 kann beispielsweise mit der Steuer- und Auswerteeinrichtung 24 angesteuert werden, um die Strahlrichtung der optischen Strahlen 32 im Überwachungsbereich 16 einzustellen. Auf diese Weise kann durch entsprechende Ansteuerung der Strahl-Umlenkeinrichtung 30 die Strahlrichtung der optischen Strahlen 32 im Überwachungsbereich 16 geschwenkt und damit dieser mit den optischen Strahlen 32 abgetastet werden. Beispielhaft kann die Strahl-Umlenkeinrichtung 30 so ausgestaltet sein, dass mit ihr die Strahlrichtungen der optischen Strahlen 32 in einer Ebene, beispielsweise parallel zur x-y-Ebene, ein normaler Betriebsorientierung des Fahrzeugs 10 in der Horizontalen, geschwenkt werden können.

Die auf das Objekt 18 treffenden optischen Strahlen 32 können an dem Objekt 18 reflektiert werden. Die in Richtung der Empfangseinrichtung 22 reflektierten optischen Strahlen 32 können mit der Empfangseinrichtung 22 empfangen werden. Je nach Reflektivität der reflektierenden Stelle des Objekts 18 ändert sich die Intensität der optischen Strahlen 32.

Die Empfangseinrichtung 22 umfasst einen Empfänger 42 und ein optisches Abbildungsmittel in Form einer Empfangslinse 44.

Die Empfangslinse 44 ist vom Überwachungsbereich 16 aus betrachtet vor dem Empfänger 42 angeordnet. Mit der Empfangslinse 44 können im Überwachungsbereich 16 reflektierte optische Strahlen 32 auf den Empfänger 42 abgebildet werden.

Der Empfänger 42 gemäß einem ersten Ausführungsbeispiel ist in der Figur 5 in der Vorderansicht mit Betrachtungsrichtung parallel zur x-Achse gezeigt. Der Empfänger 42 ist beispielhaft als Photodiodenzeile realisiert. Der Empfänger 42 weist beispielhaft neun Pixel auf, welche jeweils optische Empfangsbereiche 46 für optische Strahlen 32 bilden. Die Empfangsbereiche 46 sind der besseren Unterscheidung wegen mit 46-1 bis 46-9 bezeichnet. Mit dem Empfänger 34 können jeweils auf die Empfangsbereiche 46 treffende optische Strahlen 32 in elektrische Empfangsgrößen beispielsweise elektrische Empfangssignale, umgewandelt werden.

Der Empfänger 42 ist funktional mit der Steuer- und Auswerteeinrichtung 24 verbunden. Mit der Steuer- und Auswerteeinrichtung 24 können der Empfänger 42 gesteuert werden und mit dem Empfänger 42 ermittelte Informationen, beispielsweise die elektrischen Empfangsgrößen, ausgewertet werden.

Die Empfangsbereiche 46 sind entlang einer gedachten Empfängerachse 48 in einer Reihe nebeneinander angeordnet. Die Empfangsbereichsachse 48 verläuft beispielhaft parallel zur y-Achse und senkrecht zur x-Achse. Die Abstände 50 zwischen den Zentren 52 von benachbarten Empfangsbereichen 46 sind beispielhaft identisch.

Mit der Empfangslinse 44 können die auftreffenden optischen Strahlen 32 richtungsabhängig auf die Empfangsbereiche 46 abgebildet werden. Aus den Positionen der angeleuchteten Empfangsbereiche 46 innerhalb der Photodiodenzeile des Empfängers 42 kann eine Richtung ermittelt werden, aus der die optischen Strahlen 32 kommen, also in der sich das reflektierende Objekt 18 relativ zum LiDAR-System 12 befindet.

Sowohl die Abstände 50 der Zentren 52 der Empfangsbereiche 46, als auch die Ausdehnungen 41 der Strahlprofilabschnitte 38 sind jeweils identisch. Daher sind auch die Verhältnisse der Abstände 50 der Zentren 52 untereinander und die Verhältnisse der Ausdehnungen 41 der Strahlprofilabschnitt 38 untereinander identisch, in dem Ausführungsbeispiel jeweils gleich 1.

Die Empfangslinse 44 ist so einen den Empfänger 42 angepasst, dass die Ausdehnungen 41 der Strahlprofilabschnitte 38 der reflektierten und auf die Empfangsbereiche 46 abgebildeten optischen Strahlen 32 den Abständen 50 zwischen den Zentren 52 entsprechen. So können die drei Strahlprofilabschnitte 38a, 38b und 38c jeweils auf einen von drei benachbarten Empfangsbereichen 46, in der Figur 5 beispielsweise auf die Empfangsbereiche 46-4, 46-5 und 46-6, abgebildet werden.

Bei einer Veränderung der Strahlrichtung der reflektierten optischen Strahlen 32 um einen Winkel, welcher eine Verschiebung des auf die Empfangsbereiche 46 abgebildeten Strahlprofils 34 entlang der Empfängerachse 48 um den Wert des Abstands 50 zwischen den Zentren 52 oder um ein ganzzahliges Vielfaches des Wertes des Abstands 50 bewirkt, können die jeweiligen Strahlprofilabschnitte 38 jeweils auf einen anderen Empfangsbereich 46 verschoben werden.

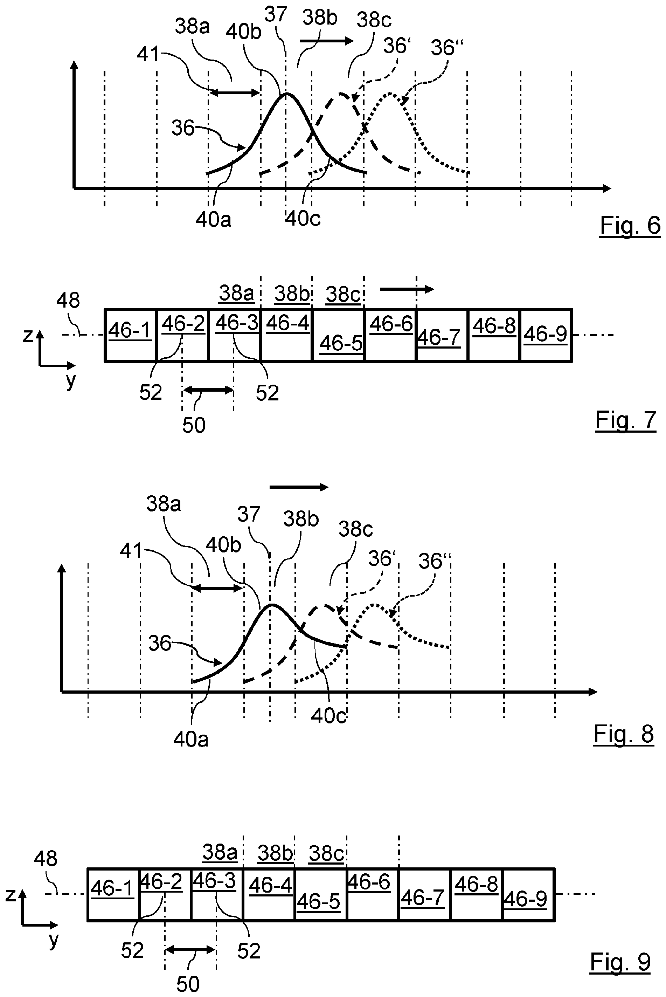

In der Figur 6 sind beispielhaft die Intensitätsverteilungen 36 der Strahlprofile 34 von drei optischen Strahlen 32 bei drei Messungen gezeigt. Figur 7 zeigt die entsprechenden Empfangsbereiche 46 des Empfängers 42. Die Strahlrichtung der optischen Strahlen 32 wurde bei jeder Messung um einen Winkel geändert, welcher eine Verschiebung des auf die Empfangsbereiche 46 abgebildeten Strahlprofils 32 um den Abstand 50 bewirkt. Dies hat zur Folge, dass die Strahlprofilabschnitte 38a, 38b und 38c von Messung zu Messung jeweils zu den benachbarten Empfangsbereichen 46 wandern.

Bei der ersten Messung, mit der durch die mit durchgezogener Linie dargestellten Intensitätsverteilung 36, wird die Intensität 40a des Strahlprofilabschnitts 38a beispielhaft von dem Empfangsbereich 46-3 empfangen. Die maximale Intensität 40b des Strahlprofilabschnitts 38b wird von dem benachbarten Empfangsbereich 46-4 und die Intensität 40c des Strahlprofilabschnitts 38c wird von dem Empfangsbereich 46-5 empfangen. Die Empfangsbereiche 46 werden zeitgleich ausgelesen, sodass die von den jeweiligen Stellen des Objekts 18 reflektierten Strahlprofilabschnitte 38a, 38b und 38c zeitgleich mit den entsprechenden Empfangsbereichen 46-3, 46-4 und 46-5 erfasst werden.

Bei der zweiten Messung, mit der durch die mit gestrichelte Linie dargestellten Intensitätsverteilung 36', wird die Intensität 40a des Strahlprofilabschnitts 38a beispielhaft von dem Empfangsbereich 46-4, die maximale Intensität 40b des Strahlprofilabschnitts 38b von dem benachbarten Empfangsbereich 46-5 und die Intensität 40c des Strahlprofilabschnitts 38c von dem Empfangsbereichs 46-6 empfangen.

Bei der dritten Messung, mit der durch die mit gepunkteter Linie dargestellten Intensitätsverteilung 36", wird die Intensität 40a des Strahlprofilabschnitts 38a beispielhaft von dem Empfangsbereich 46-5, die maximale Intensität 40b des Strahlprofilabschnitts 38b von dem benachbarten Empfangsbereich 46-6 und die Intensität 40c des Strahlprofilabschnitts 38c von dem Empfangsbereich 46-7 empfangen.

Insgesamt werden die Stellen des Objekts 18, an denen die jeweiligen Strahlprofilabschnitte 38a, 38b und 38c entsprechend der Strahlrichtung der gesendeten optischen Strahlen 32 bei der jeweiligen Messung reflektiert werden, bei den drei Messungen mit zwei unterschiedlichen Intensitäten 40, nämlich 40a und 40c einerseits und 40b andererseits, abgetastet. Hierzu ist keine Veränderung der Sendelinse 28 und/oder der Sendeleistung des Lasers 26 erforderlich. So können sowohl schwach reflektierende Stellen des Objekts 18 mit der hohen Intensität 40b des zweiten Strahlprofilabschnitts 38b, als auch stark reflektierende Stellen, beispielsweise retroreflektive Stellen, des Objekts 18, welche bei großen Intensitäten zu Übersprecheffekten zwischen den Empfangsbereichen 46 führen würden, mit den geringeren Intensitäten 40a und 40b des ersten Strahlprofilabschnitts 38a und des dritten Strahlprofilabschnitts 38c erfasst werden. Insgesamt kann so die Dynamik des LiDAR-Systems 12 bezogen auf die Reflektivität von erfassbaren Objekten 18 vergrößert werden.

In der Figur 8 ist eine Intensitätsverteilung 36 eines Strahlprofils 34 von optischen Strahlen 32 gemäß einem zweiten Ausführungsbeispiel gezeigt. Figur 9 zeigt entsprechend den Empfänger 42. Diejenigen Elemente, die zu denen des ersten Ausführungsbeispiels aus den Figuren 3 bis 7 ähnlich sind, sind mit denselben Bezugszeichen versehen. Das zweite Ausführungsbeispiel unterscheidet sich von dem ersten Ausführungsbeispiel dadurch, dass die Intensitätsverteilung 36 des Strahlprofils 34 der optischen Strahlen 32 bezüglich der Strahlachse 37 unsymmetrisch ist. Die Intensität 40a des ersten Strahlprofilabschnitts 38a ist kleiner als die Intensität 40c des dritten Strahlprofilabschnitts 38c. Auf diese Weise werden in dem Strahlprofil 34 drei Strahlprofilabschnitte 38 mit drei unterschiedlichen Intensitäten 40 realisiert. So können durch entsprechendes schwenken der Strahlrichtung der optischen Strahlen 32 die Stellen des Objekts 18 nacheinander mit drei unterschiedlichen Intensitäten 40a, 40b und 40c abgetastet werden.

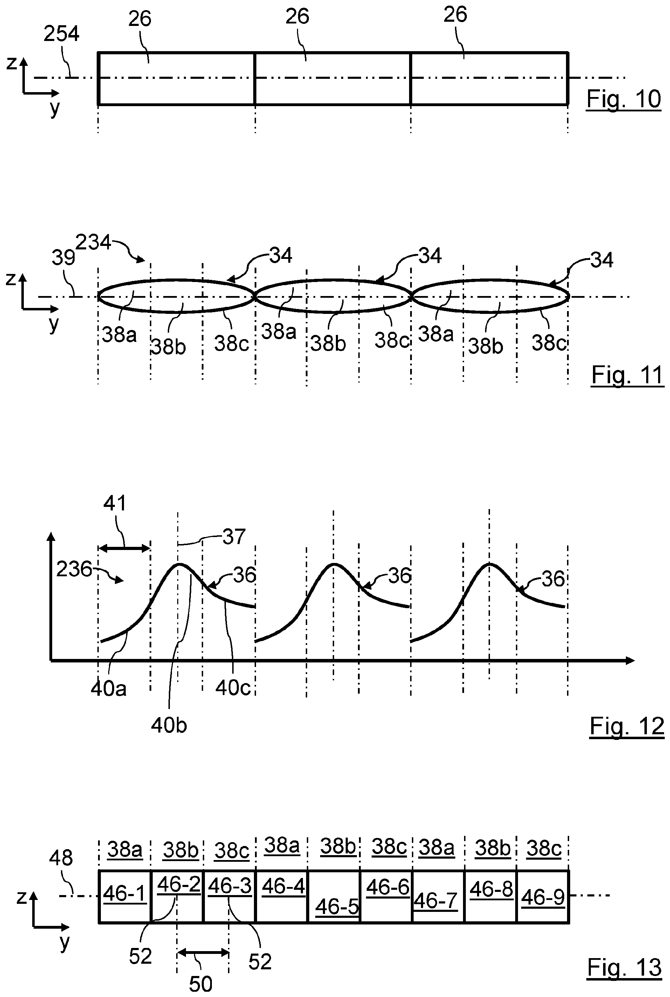

In der Figur 10 ist eine Anordnung von drei Lasern 26 einer Sendeeinrichtung 20 eines LiDAR-Systems 12 gemäß am dritten Ausführungsbeispiel gezeigt. In der Figur 11 ist ein Strahlprofil 234 eines optischen Strahls 32 gezeigt, welche sich aus den individuellen Strahlprofilen 34 von optischen Strahlen zusammensetzt, der mit den Lasern 26 erzeugt wird. Figur 12 zeigt die Intensitätsverteilung 236 des Strahlprofils 234. Die individuellen Intensitätsverteilungen 36 der individuellen Strahlprofile 34 entsprechen der asymmetrischen Intensitätsverteilung 36 des Strahlprofils 34 des zweiten Ausführungsbeispiels aus der Figur 8

Die drei Laser 26 sind entlang einer gedachten Sender-Querachse 254 nebeneinander angeordnet. Die Sender-Querachse 254 verläuft beispielhaft parallel zur Empfängerachse 48 des Empfängers 42. Der Empfänger 42 ist in der Figur 13 gezeigt.

Die Laser 26 und ihre jeweiligen, in der Figur 10 nicht gezeigten Sendelinsen 28, sind so aneinander angepasst, dass die Strahlprofilabschnitte 38 der benachbarten individuellen Strahlprofile 34 aneinander anschließen. Beispielsweise schließt der erste Strahlprofilabschnitt 38a des zweiten individuellen Strahlprofils 34, in der Figur 12 in der Mitte, an den dritten Strahlprofilabschnitt 38c des ersten individuellen Strahlprofils 34, in der Figur 12 links, an. Auf diese Weise wird mit dem zusammengesetzten Strahlprofil 234 zeitgleich ein größerer räumlicher Bereich abgetastet. Mit dem Strahlprofil 234 der reflektierten optischen Strahlen 32 werden gleichzeitig alle neun Empfangsbereiche 46 des Empfängers 42 abgedeckt.

## Patentansprüche

1. Verfahren zum Betreiben eines LiDAR-Systems (12), insbesondere eines LiDAR-Systems (12) für ein Fahrzeug (10), bei dem
mit wenigstens einer Sendeeinrichtung (20) wenigstens ein optischer Strahl (32) in wenigstens einen Überwachungsbereich (16) gesendet wird,
mit wenigstens einem Empfangsbereich (46) wenigstens einer Empfangseinrichtung (22) wenigstens ein an wenigstens einem in dem wenigstens einen Überwachungsbereich (16) vorhandenen Objekt (18) reflektierter optischer Strahl (32) empfangen und in wenigstens eine Empfangsgröße umgewandelt wird,
aus wenigstens einer Empfangsgröße wenigstens eine Objektinformation zu wenigstens einem den optischen Strahl (32) reflektierenden Objekt (18) ermittelt wird,
wenigstens ein optischer Strahl (32) mit einer über sein Strahlprofil (34; 234) definierten Intensitätsverteilung (36; 236) gesendet wird,
wenigstens zwei Strahlprofilabschnitte (38a, 38b, 38c) des Strahlprofils (34; 234) des wenigstens einen optischen Strahls (32) auf wenigstens zwei benachbarte Empfangsbereiche (46) abgebildet, mit den Empfangsbereichen (46) jeweils empfangen und in jeweilige Empfangsgrößen umgewandelt werden,
wobei der wenigstens eine optische Strahl (32) in den wenigstens zwei Strahlprofilabschnitten (38a, 38b, 38c) mit unterschiedlichen Intensitäten (40a, 40b, 40c) gesendet wird,
**dadurch gekennzeichnet, dass**
der wenigstens eine optische Strahl (32) mit einem definierten Strahlprofil (34; 234) gesendet wird, bei dem die Verhältnisse der räumlichen Ausdehnung (41) der Strahlprofilabschnitte (38a, 38b, 38c) in einer Raumrichtung mit unterschiedlichen Intensitäten (40a, 40b, 40c) den Verhältnissen der Abstände der Zentren (50) der wenigstens zwei Empfangsbereiche (46) entspricht.

2. Verfahren nach Anspruch 1, **dadurch gekennzeichnet, dass**
wenigstens ein optischer Strahl (32) gesendet wird, dessen Strahlprofil (34) eine bezüglich wenigstens einer Strahlachse (37) symmetrische Intensitätsverteilung (36) aufweist, und/oder
wenigstens ein optischer Strahl (32) gesendet wird, dessen Strahlprofil (234) eine bezüglich wenigstens einer Strahlachse (37) unsymmetrische Intensitätsverteilung (36; 236) aufweist,
und/oder
wenigstens ein optischer Strahl (32) gesendet wird, dessen Strahlprofil (234) wenigstens drei Strahlprofilabschnitte (38a, 38b, 38c) mit unterschiedlichen Intensitäten (40a, 40b, 40c) aufweist.

3. Verfahren nach Anspruch 1 oder 2, **dadurch gekennzeichnet, dass** wenigstens zwei optische Strahlen (32) zeitlich versetzt, insbesondere nacheinander, in unterschiedliche Strahlrichtungen in den wenigstens einen Überwachungsbereich (16) gesendet werden.

4. Verfahren nach Anspruch 3, **dadurch gekennzeichnet, dass**
Änderungen von Strahlrichtungen der wenigstens zwei optischen Strahlen (32) mit wenigstens einer Strahlumlenkeinrichtung (30) realisiert werden
und/oder
Änderungen von Strahlrichtungen durch insbesondere zeitlich versetztes Aktivieren von wenigstens zwei Strahlquellen (26), denen unterschiedliche Strahlrichtungen zugeordnet werden, realisiert werden.

5. Verfahren nach Anspruch 3 oder 4, **dadurch gekennzeichnet, dass**
die Richtung der gesendeten wenigstens zwei optischen Strahlen (32) um ein Maß, insbesondere einen Winkel, unterschiedlich eingestellt werden, welches auf der Seite der Empfangsbereiche (46) einem ganzzahligen vielfachen eines Abstands (50) von Zentren von benachbarten Empfangsbereichen (46) entspricht,
und/oder
die Richtungen der gesendeten wenigstens zwei optischen Strahlen (32) in einer Schrittweite verändert werden, die auf der Seite der Empfangsbereiche (46) einem Abstand von Zentren (50) von benachbarten Empfangsbereichen (46) entspricht.

6. Verfahren nach einem der vorigen Ansprüche, **dadurch gekennzeichnet, dass** zur Ermittlung von Objektinformationen Empfangsgrößen von Empfangsbereichen (46), auf die Strahlprofilabschnitte (38a, 38b, 38c) des reflektierten wenigstens einen optischen Strahls (32) mit unterschiedlichen Intensitäten (40a, 40b, 40c) abgebildet werden, kombiniert werden.

7. Verfahren nach einem der vorigen Ansprüche, **dadurch gekennzeichnet, dass**
wenigstens zwei benachbarte Empfangsbereiche (46), auf welche wenigstens zwei Strahlprofilabschnitte (38a, 38b, 38c) abgebildet werden, parallel, insbesondere zeitgleich, ausgelesen werden
und/oder
wenigstens zwei benachbarten Empfangsbereiche (46), auf welche wenigstens zwei Strahlprofilabschnitte (38a, 38b, 38c) abgebildet werden, seriell, insbesondere nacheinander, ausgelesen werden
und/oder
nur der Empfangsbereich (46) der wenigstens zwei Empfangsbereiche (46), auf welche die wenigstens zwei Strahlprofilabschnitte (38a, 38b, 38c) abgebildet werden, ausgelesen wird, auf welchen der Strahlprofilabschnitt (38a, 38b, 38c) mit der größeren Intensität (40a, 40b, 40c) abgebildet wird.

8. LiDAR-System (12), insbesondere LiDAR-System (12) für ein Fahrzeug (10),
mit wenigstens einer Sendeeinrichtung (20) zum Senden von optischen Strahlen (32) in wenigstens einen Überwachungsbereich (16), wobei die wenigstens eine Sendeeinrichtung (20) wenigstens eine Strahlquelle (26) zur Erzeugung von optischen Strahlen (32) aufweist,
mit wenigstens einer Empfangseinrichtung (22), welche wenigstens einen Empfangsbereich (46) aufweist zum Empfangen von an Objekten (18) in dem wenigstens einen Überwachungsbereich (16) reflektierten optischen Strahlen (32) und zur Umwandlung von empfangenen optischen Strahlen (32) in entsprechende Empfangsgrößen, und mit wenigstens einer Auswerteeinrichtung (24) zur Ermittlung von Objektinformationen zu wenigstens einem optische Strahlen (32) reflektierenden Objekt (18) aus ermittelten Empfangsgrößen,
die wenigstens eine Sendeeinrichtung (20) wenigstens ein Mittel (28) aufweist zur Definition einer Intensitätsverteilung (36; 236) in Strahlprofilen (34; 234) von optischen Strahlen (32),
die wenigstens eine Empfangseinrichtung (22) wenigstens zwei Empfangsbereiche (46) aufweist, die benachbart angeordnet sind,
die wenigstens eine Empfangseinrichtung (22) wenigstens ein Abbildungsmittel (44) aufweist zur Abbildung von wenigstens zwei Strahlprofilabschnitten (38a, 38b, 38c) von Strahlprofilen (34; 234) von optischen Strahlen (32) auf die wenigstens zwei benachbarten Empfangsbereiche (46),
wobei die Intensität (40a, 40b, 40c) in Strahlprofilabschnitten (38a, 38b, 38c) von gesendeten optischen Strahlen (32) vor deren Reflektion, welche den wenigstens zwei auf die wenigstens zwei Empfangsbereiche (46) abgebildeten Strahlprofilabschnitten (38a, 38b, 38c) der reflektierten optischen Strahlen (32) entsprechen, unterschiedlich sind,
**dadurch gekennzeichnet, dass**
die wenigstens eine Sendeeinrichtung (20) dazu ausgebildet ist, den wenigstens einen optischen Strahl (32) mit einem definierten Strahlprofil (34; 234) zu senden, bei dem die Verhältnisse der räumlichen Ausdehnung (41) der Strahlprofilabschnitte (38a, 38b, 38c) in einer Raumrichtung mit unterschiedlichen Intensitäten (40a, 40b, 40c) den Verhältnissen der Abstände der Zentren (50) der wenigstens zwei Empfangsbereiche (46) entspricht.

9. LiDAR-System nach Anspruch 8, **dadurch gekennzeichnet, dass**
wenigstens eine Sendeeinrichtung (20) wenigstens ein Strahlformmittel, insbesondere wenigstens eine optische Linse (28) oder dergleichen, aufweist zum Formen von definierten Strahlprofilen (34; 234) von mit der wenigstens einen Strahlquelle (26) erzeugten optischen Strahlen (32)
und/oder
wenigstens eine Sendeeinrichtung (20) mehrere Strahlquellen (26) jeweils zur Erzeugung von individuellen optischen Strahlen (32) aufweist, die so angeordnet sind, dass die individuellen optischen Strahlen (32) zu optischen Strahlen (32) mit Strahlprofilen (234) mit definierten Intensitätsverteilungen (236) kombiniert werden.

10. LiDAR-System nach Anspruch 8 oder 9, **dadurch gekennzeichnet, dass** wenigstens eine Sendeeinrichtung (20) wenigstens eine Strahl-Umlenkeinrichtung (30), insbesondere wenigstens einen Umlenkspiegel, wenigstens einen Schwenkspiegel, wenigstens einen Schwingspiegel und/oder wenigstens ein diffraktives optisches Element oder dergleichen, aufweist.

11. Fahrzeug (10) mit wenigstens einem LiDAR-System (12), **dadurch gekennzeichnet, dass** das Fahrzeug (10) wenigstens ein LiDAR-System (12) nach einem der Ansprüche 8 bis 10 aufweist.

## Claims

1. Method for operating a LiDAR system (12), in particular a LiDAR
system (12) for a vehicle (10), in which
at least one optical beam (32) is transmitted into at least one monitoring area (16) by at least one transmitting device (20),
at least one receiving device (22) receives at least one optical beam (32) reflected by at least one object (18) present in at least one receiving area (46)
(16), is received and converted into at least one received variable,
at least one object piece of information relating to at least one object (18) reflecting the optical beam (32) is determined from at least one received variable,
at least one optical beam (32) with an intensity distribution (36; 236) defined by its beam profile (34; 234) is transmitted,
at least two beam profile sections (38a, 38b, 38c) of the beam profile (34; 234) of the at least one optical beam (32) are imaged onto at least two adjacent receiving areas (46), are received by the receiving areas (46) and converted into respective receiving quantities,
wherein the at least one optical beam (32) is transmitted in the at least two beam profile sections (38a, 38b, 38c) with different intensities (40a, 40b, 40c),
**characterized in that**
the at least one optical beam (32) is transmitted with a defined beam profile (34; 234) in which the ratios of the spatial extent (41) of the beam profile sections (38a, 38b, 38c) in a spatial direction with different intensities (40a, 40b, 40c) correspond to the ratios of the distances between the centers (50) of the at least two receiving areas (46).

2. Method according to claim 1, **characterized in that**
at least one optical beam (32) is transmitted whose beam profile (34) has an intensity distribution (36) that is symmetrical with respect to at least one beam axis (37), and/or
at least one optical beam (32) is emitted, the beam profile (234) of which has an intensity distribution (36; 236) that is asymmetrical with respect to at least one beam axis (37),
and/or
at least one optical beam (32) is transmitted whose beam profile (234) has at least three beam profile sections (38a, 38b, 38c) with different intensities (40a, 40b, 40c).

3. Method according to claim 1 or 2, **characterized in that** at least two optical beams (32) are transmitted with a time delay, in particular one after the other, in different beam directions into the at least one monitoring area (16).

4. Method according to claim 3, **characterized in that**
changes in the beam directions of the at least two optical beams (32) are realized with at least one beam deflection device (30)
and/or
changes in beam directions are implemented in particular by temporally staggered activation of at least two beam sources (26) to which different beam directions are assigned.

5. Method according to claim 3 or 4, **characterized in that**
the direction of the at least two transmitted optical beams (32) is set differently by a quantity, in particular an angle, which corresponds on the side of the receiving areas (46) to an integer multiple of a distance (50) between centers of adjacent receiving areas (46),
and/or
the directions of the at least two transmitted optical beams (32) are changed in a step size which corresponds on the side of the receiving areas (46) to a distance (50) between centers of adjacent receiving areas (46).

6. Method according to one of the preceding claims, **characterized in that** to determine object information, the reception magnitudes of reception areas (46), are imaged onto the beam profile sections (38a, 38b, 38c) of the reflected at least one optical beam (32) with different intensities (40a, 40b, 40c), are combined.

7. Method according to one of the preceding claims, **characterized in that** at
least two adjacent receiving areas (46), onto which at least two beam profile sections (38a, 38b, 38c) are imaged, are read out in parallel, in particular simultaneously
and/or
at least two adjacent receiving areas (46), onto which at least two beam profile sections (38a, 38b, 38c) are imaged, are read out serially, in particular one after the other
and/or
only the receiving area (46) of the at least two receiving areas (46) onto which the at least two beam profile sections (38a, 38b, 38c) are imaged is read out, onto which the beam profile section (38a, 38b, 38c) with the greater intensity (40a, 40b, 40c) is imaged.

8. LiDAR system (12), in particular LiDAR system (12) for a vehicle (10),
with at least one transmitting device (20) for transmitting optical beams (32) into at least one monitoring area (16), wherein the at least one transmitting device (20) has at least one beam source (26) for generating optical beams (32),
with at least one receiving device (22) which has at least one receiving area (46) for receiving optical beams (32) reflected from objects (18) in the at least one monitoring area (16) and for converting received optical beams (32) into corresponding received values, and with at least one evaluation device (24) for determining object information about at least one object (18) reflecting optical beams (32) from determined reception values,
the at least one transmitting device (20) has at least one means (28) for defining an intensity distribution (36; 236) in beam profiles (34; 234) of optical beams (32), (32),
the at least one receiving device (22) has at least two receiving areas (46) that are arranged adjacent to each other,
the at least one receiving device (22) has at least one imaging means (44) for imaging at least two beam profile sections (38a, 38b, 38c) of beam profiles (34; 234) of optical beams (32) onto the at least two adjacent receiving areas (46),
wherein the intensity (40a, 40b, 40c) in beam profile sections (38a, 38b, 38c) of transmitted optical beams (32) prior to their reflection, which correspond to the at least two beam profile sections (38a, 38b, 38c) imaged onto the at least two receiving areas (46), 38c) of the reflected optical beams (32) correspond to the at least two receiving areas (46), are different, **characterized in that**
the at least one transmitting device (20) is designed to transmit the at least one optical beam (32) with a defined beam profile (34; 234) in which the ratios of the spatial extent (41) of the beam profile sections (38a, 38b, 38c) in a spatial direction with different intensities (40a, 40b, 40c) correspond to the ratios of the distances between the centers (50) of the at least two receiving areas (46).

9. LiDAR system according to claim 8, **characterized in that**
at least one transmitting device (20) has at least one beam shaping means, in particular at least one optical lens (28) or the like, for shaping defined beam profiles (34; 234) of optical beams (32) generated by the at least one beam source (26)
and/or
at least one transmitting device (20) has several beam sources (26), each for generating individual optical beams (32), which are arranged such that the individual optical beams (32) are combined to form optical beams (32) with beam profiles (234) with defined intensity distributions (236).

10. LiDAR system according to claim 8 or 9, **characterized in that** at least
at least one transmitting device (20) has at least one beam deflection device (30), in particular at least one deflection mirror, at least one swivel mirror, at least one oscillating mirror and/or at least one diffractive optical element or the like.

11. Vehicle (10) with at least one LiDAR system (12), **characterized in that** the vehicle (10) has at least one LiDAR system (12) according to one of claims 8 to 10.

## Revendications

1. Procédé pour faire fonctionner un système LiDAR (12), en particulier un système LiDAR
(12) pour un véhicule (10), dans lequel
au moins un faisceau optique (32) est émis dans au moins une zone de surveillance (16) à l'aide d'au moins un dispositif d'émission (20),
au moins un faisceau optique (32) réfléchi par au moins un objet (18) présent dans au moins une zone de surveillance (16) est reçu par au moins un dispositif de réception (22) dans au moins une zone de réception (46) et est converti en au moins une grandeur de réception.
(16), est reçu et converti en au moins une grandeur de réception,
à partir d'au moins une grandeur de réception, au moins une information d'objet est déterminée pour au moins un objet (18) réfléchissant le faisceau optique (32),
au moins un faisceau optique (32) est émis avec une distribution d'intensité (36 ; 236) définie par son profil de faisceau (34 ; 234),
au moins deux sections (38a, 38b, 38c) du profil de faisceau (34 ; 234) d'au moins un faisceau optique (32) sont reproduites sur au moins deux zones de réception adjacentes (46), sont reçues respectivement par les zones de réception (46) et sont converties en grandeurs de réception respectives,
le au moins un faisceau optique (32) étant émis dans les au moins deux sections de profil de faisceau (38a, 38b, 38c) avec des intensités différentes (40a, 40b, 40c),
**caractérisé en ce que**
le au moins un faisceau optique (32) est émis avec un profil de faisceau défini (34 ; 234) dans lequel les rapports entre l'extension spatiale (41) des sections de profil de faisceau (38a, 38b, 38c) dans une direction spatiale avec différentes intensités (40a, 40b, 40c) correspondent aux rapports des distances entre les centres (50) des au moins deux zones de réception (46).

2. Procédé selon la revendication 1, **caractérisé en ce qu'**
au moins un faisceau optique (32) est émis, dont le profil de faisceau (34) présente une répartition d'intensité (36) symétrique par rapport à au moins un axe de faisceau (37), et/ou
au moins un faisceau optique (32) est émis, dont le profil de faisceau (234) présente une répartition d'intensité (36 ; 236) asymétrique par rapport à au moins un axe de faisceau (37),
et/ou
au moins un faisceau optique (32) est émis, dont le profil de faisceau (234) présente au moins trois sections de profil de faisceau (38a, 38b, 38c) avec des intensités différentes (40a, 40b, 40c).

3. Procédé selon la revendication 1 ou 2, **caractérisé en ce qu'**au moins deux faisceaux optiques (32) sont émis de manière décalée dans le temps, en particulier l'un après l'autre, dans différentes directions de faisceau dans au moins une zone de surveillance (16).

4. Procédé selon la revendication 3, **caractérisé en ce que**
les modifications des directions des au moins deux faisceaux optiques (32) sont réalisées à l'aide d'au moins un dispositif de déviation de faisceau (30)
et/ou
les modifications des directions des faisceaux sont réalisées notamment par l'activation décalée dans le temps d'au moins deux sources de faisceaux (26) auxquelles sont attribuées différentes directions de faisceaux.

5. Procédé selon la revendication 3 ou 4, **caractérisé en ce que**
la direction des au moins deux faisceaux optiques (32) émis est réglée différemment d'une valeur, en particulier d'un angle, qui correspond, du côté des zones de réception (46), à un multiple entier d'une distance (50) entre les centres de zones de réception (46) voisines,
et/ou
les directions des au moins deux rayons optiques (32) émis sont modifiées d'un pas qui correspond, du côté des zones de réception (46), à une distance entre les centres (50) de zones de réception (46) voisines.

6. Procédé selon l'une des revendications précédentes, **caractérisé en ce que** pour déterminer les informations relatives à l'objet, les grandeurs de réception des zones de réception (46), sur les sections de profil de faisceau (38a, 38b, 38c) du ou des faisceaux optiques réfléchis (32) avec différentes intensités (40a, 40b, 40c) sont combinées.

7. Procédé selon l'une des revendications précédentes, **caractérisé en ce qu'**au moins deux zones de réception voisines (46), sur lesquelles au moins deux sections de profil de faisceau (38a, 38b, 38c) sont reproduites, sont lues en parallèle, en particulier simultanément
et/ou
au moins deux zones de réception voisines (46), sur lesquelles sont représentées au moins deux sections de profil de faisceau (38a, 38b, 38c), sont lues en série, en particulier l'une après l'autre
et/ou
seule la zone de réception (46) des au moins deux zones de réception (46) sur lesquelles sont représentées les au moins deux sections de profil de faisceau (38a, 38b, 38c) est lue, sur laquelle la section de profil de faisceau (38a, 38b, 38c) avec la plus grande intensité (40a, 40b, 40c).

8. Système LiDAR (12), en particulier système LiDAR (12) pour un véhicule (10),
comprenant au moins un dispositif d'émission (20) pour émettre des faisceaux optiques (32) dans au moins une zone de surveillance (16), le au moins un dispositif d'émission (20) comportant au moins une source de faisceaux (26) pour générer des faisceaux optiques (32),
avec au moins un dispositif de réception (22) qui présente au moins une zone de réception (46) pour recevoir des rayons optiques (32) réfléchis sur des objets (18) dans au moins une zone de surveillance (16) et pour convertir les rayons optiques (32) reçus en grandeurs de réception correspondantes, et avec au moins un dispositif d'évaluation (24) pour déterminer des informations d'objet sur au moins un objet (18) réfléchissant des rayons optiques (32) à partir de grandeurs de réception déterminées,
le au moins un dispositif d'émission (20) comporte au moins un moyen (28) pour définir définir une distribution d'intensité (36 ; 236) dans des profils de faisceaux (34 ; 234) de faisceaux optiques (32),
le ou les dispositifs de réception (22) comportent au moins deux zones de réception (46) qui sont disposées de manière adjacente,
le ou les dispositifs de réception (22) comportant au moins un moyen de reproduction (44) pour reproduire au moins deux sections de profil de faisceau (38a, 38b, 38c) de profils de faisceau (34 ; 234) de faisceaux optiques (32) sur les au moins deux zones de réception adjacentes (46),
l'intensité (40a, 40b, 40c) dans les sections de profil de faisceau (38a, 38b, 38c) des faisceaux optiques émis (32) avant leur réflexion, qui correspondent aux au moins deux sections de profil de faisceau (38a, 38b, 38c) des rayons optiques réfléchis (32) correspondent, sont différentes, **caractérisé en ce que**
le au moins un dispositif d'émission (20) est conçu pour émettre le au moins un faisceau optique (32) avec un profil de faisceau défini (34 ; 234) dans lequel les rapports entre l'extension spatiale (41) des sections de profil de faisceau (38a, 38b, 38c) dans une direction spatiale avec des intensités différentes (40a, 40b, 40c) correspondent aux rapports des distances entre les centres (50) des au moins deux zones de réception (46).

9. Système LiDAR selon la revendication 8, **caractérisé en ce que**
au moins un dispositif d'émission (20) comporte au moins un moyen de mise en forme de faisceau, en particulier au moins une lentille optique (28) ou similaire, pour mettre en forme des profils de faisceau définis (34 ; 234) de faisceaux optiques (32) générés par la au moins une source de faisceau (26)
et/ou
au moins un dispositif émetteur (20) comporte plusieurs sources de faisceaux (26) destinées chacune à générer des faisceaux optiques individuels (32), qui sont disposées de telle sorte que les faisceaux optiques individuels (32) soient combinés en faisceaux optiques (32) présentant des profils de faisceaux (234) avec des répartitions d'intensité définies (236).

10. Système LiDAR selon la revendication 8 ou 9, **caractérisé en ce qu'**au moins au moins un dispositif d'émission (20) au moins un dispositif de déviation de faisceau (30), en particulier au moins un miroir de déviation, au moins un miroir pivotant, au moins un miroir oscillant et/ou au moins un élément optique diffractif ou similaire.

11. Véhicule (10) avec au moins un système LiDAR (12), **caractérisé en ce que** le véhicule (10) comporte au moins un système LiDAR (12) selon l'une des revendications 8 à 10.
